# EUROPEAN PATENT SPECIFICATION

(11) **EP 4 530 899 B1**
(45) Date of publication and mention of the grant of the patent: **24.06.2026**
(21) Application number: 24186228.3
(22) Date of filing: 03.07.2024
(51) Int. Cl.: G06F 21/57, G06F 21/55, H04L 9/40

(54) **APPARATUS AND METHOD FOR SECURE PLATFORM MONITORING TECHNOLOGY**
VORRICHTUNG UND VERFAHREN FÜR SICHERE PLATTFORMÜBERWACHUNGSTECHNOLOGIE
APPAREIL ET PROCÉDÉ POUR UNE TECHNOLOGIE DE SURVEILLANCE DE PLATEFORME SÉCURISÉE

(30) Priority: 29.09.2023 US 202318375434
(43) Date of publication of application: 02.04.2025
(73) Proprietor: INTEL Corporation, Santa Clara, CA 95054 (US)
(72) Inventor: ORIOL, Mariusz, 81-502 Gdynia (PL); CHAIKIN, Baruch, 20196 D.N. Misagv (IL); RAMAN, Arvind, Austin, 78749 (US); MATUSZCZAK, Piotr, 83-304 Kawle Dolne (PL); OUZIEL, Ido, Portland, 97229 (US); YASIN, Ahmad, 1790700 Kafr Manda (IL); DOWECK, Jacob, 34792 Haifa (IL)
(74) Representative: Goddar, Heinz J.

(56) References cited:
- EP-B1- 3 311 547
- US-A1- 2017 094 377
- US-A1- 2022 141 201

## Description

### BACKGROUND

### Field of the Invention

This invention relates generally to the field of computer processors. More particularly, the invention relates to an apparatus and method for secure platform monitoring technology.

### Description of the Related Art

Core out-of-band (OOB) telemetry is a platform monitoring mechanism in which cores periodically transmit telemetry data to a management unit (e.g., within the shared or "uncore" region of the processor), which accumulates the telemetry data and potentially transmits the accumulated telemetry data to an external management agent. For example, the OOB manageability service microcontroller (OOB-MSM) is a shared/uncore unit that collects telemetry data from the cores and reports out the telemetry data to external management agents, such as baseboard management controller (BMC). The telemetry data includes, but is not limited to, information about core instruction execution, environmental data (temperature, frequency, voltage) and cache operations.
US 2022/141201 A1 describes an apparatus which provides a mechanism to implement a trusted telemetry governor (TTG) inside a trusted execution environment. The TTG is to determine a security policy to be applied to telemetry data corresponding to component of a computing infrastructure, receive the telemetry data in encrypted format and, based on the security policy: process the telemetry data including at least one of generating transformed telemetry data or analyzing the telemetry data to generate a report therefrom, and generating telemetry information from the telemetry data. The telemetry information includes at least one of processed telemetry data, a report, or a recommendation based on an analysis of the telemetry data. The TTG is to send the telemetry information outside of the trusted execution environment to a consumer of the telemetry data.
The invention is set forth in the independent claims. Embodiments of the invention are described in the dependent claims.

### BRIEF DESCRIPTION OF THE DRAWINGS

A better understanding of the present invention can be obtained from the following detailed description in conjunction with the following drawings, in which:
A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
**FIGS. 9A-D** illustrate embodiments of how the R, X, and B fields of the prefix are used;
**FIGS. 10A-B** illustrate examples of a second instruction prefix;
**FIG. 11** illustrates payload bytes of one embodiment of an instruction prefix;
**FIG. 12** illustrates instruction conversion and binary translation implementations;
**FIG. 13** illustrates an architecture in accordance with embodiments of the invention;
**FIG. 14** illustrates interactions between a core, presentation circuitry, and a telemetry aggregator in accordance with embodiments of the invention;
**FIGS. 15A-C** illustrate a series of transactions in accordance with embodiments of the invention; and
**FIG. 16** illustrates a method in accordance with embodiments of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

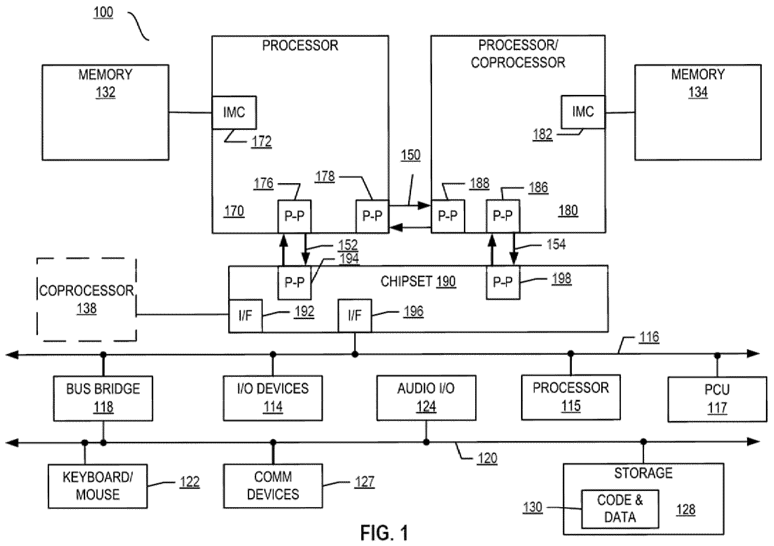

FIG. 1 illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

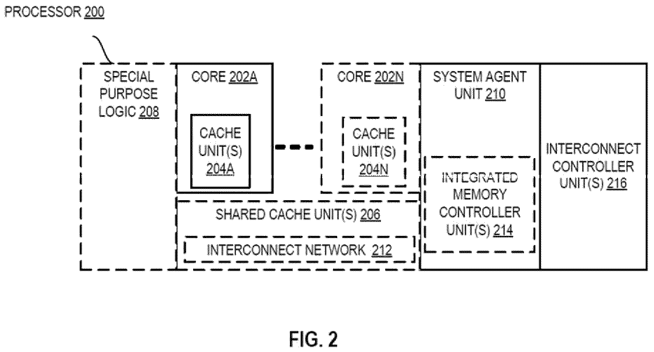

FIG. 2 illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of FIG. 1.

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

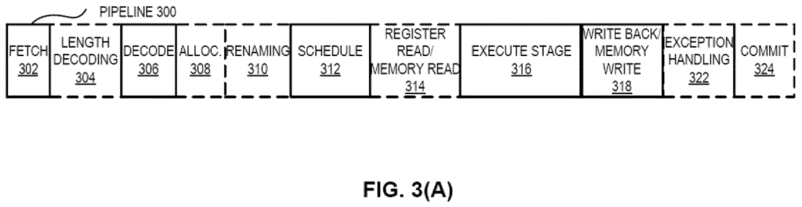

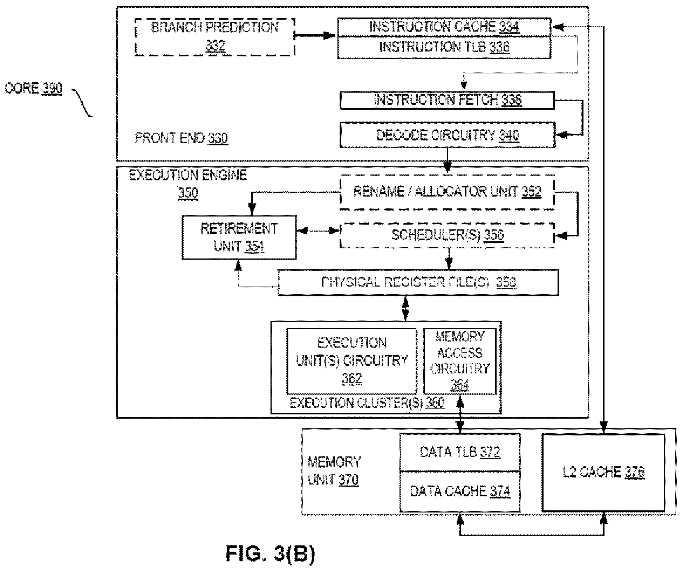

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

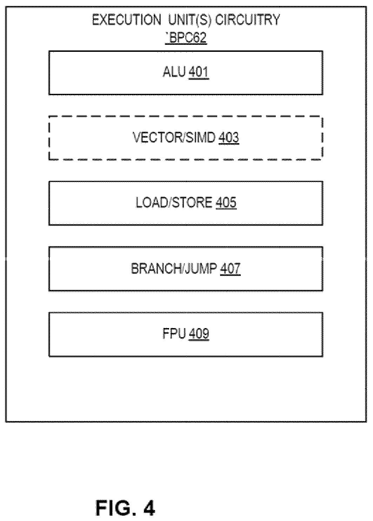

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

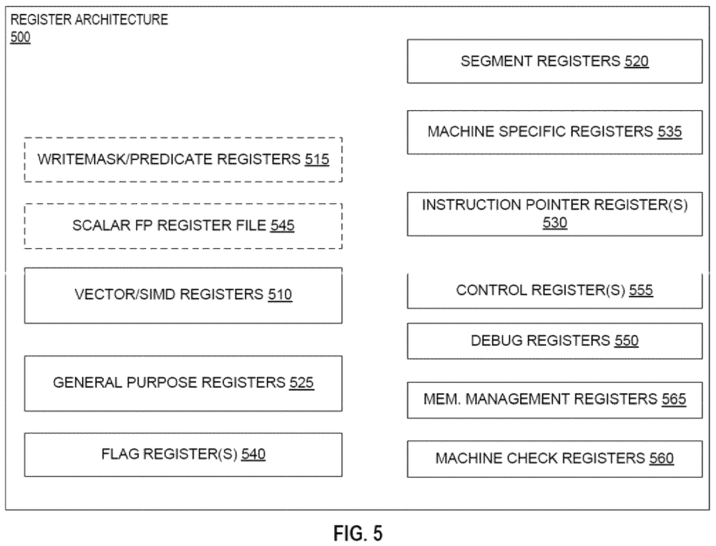

FIG. 5 is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

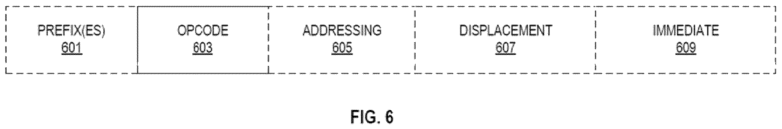

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

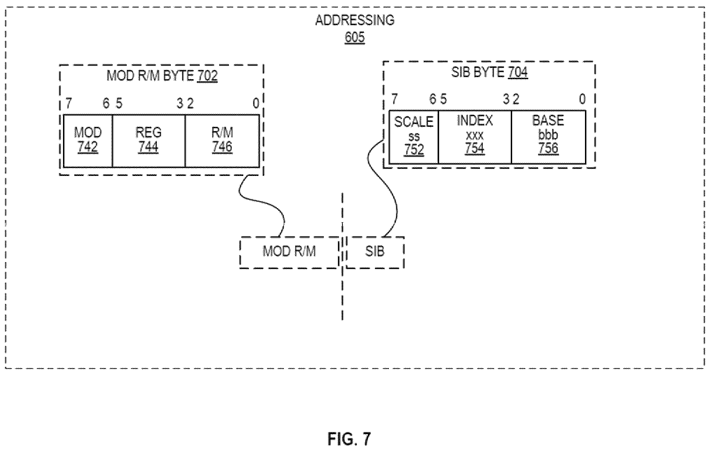

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

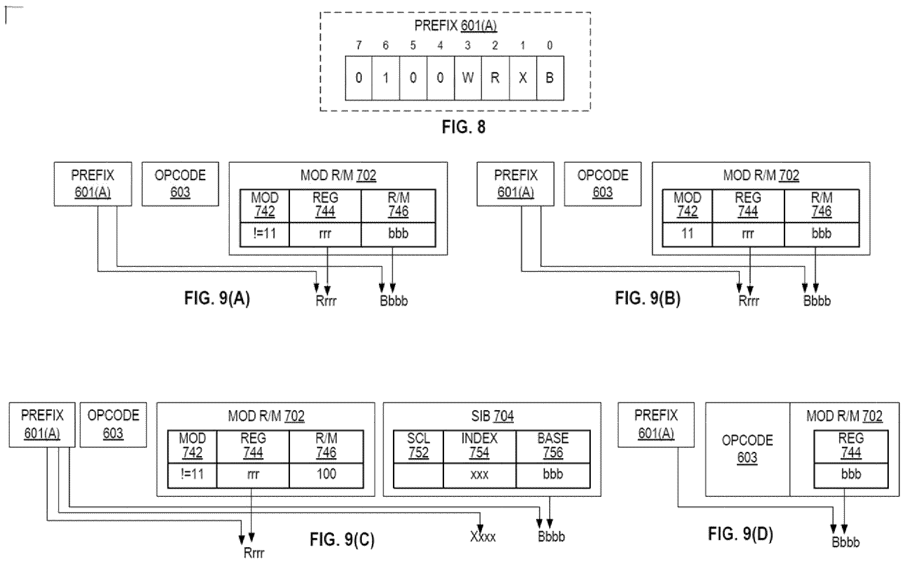

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

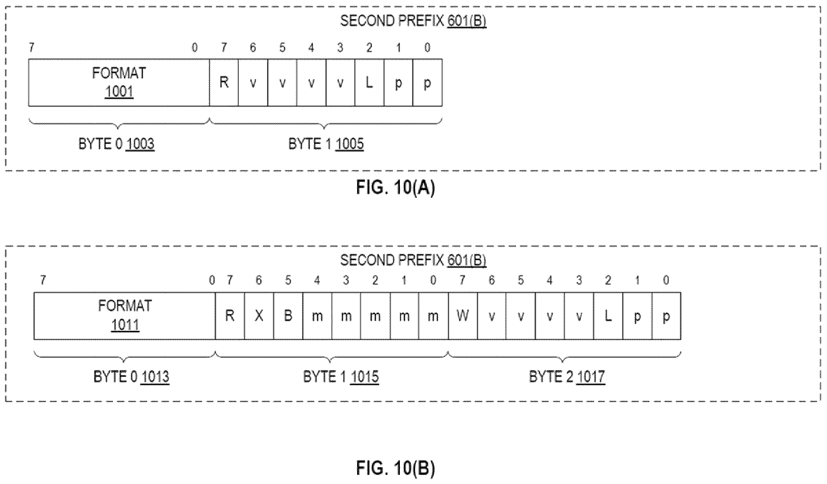

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

FIG. 10(B) illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

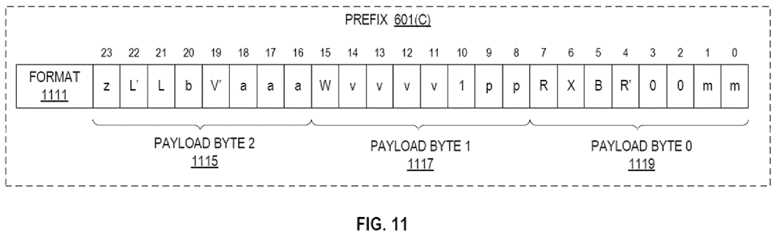

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18: 16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | VVVV | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

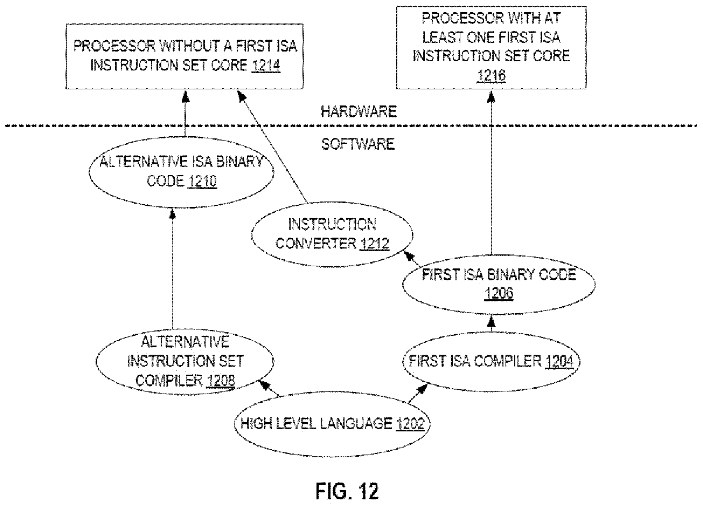

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA a binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### APPARATUS AND METHOD FOR

### SECURE PLATFORM MONITORING TECHNOLOGY

Core out-of-band (OOB) telemetry is a platform monitoring mechanism in which cores periodically transmit telemetry data to a management unit (e.g., within the shared or "uncore" region of the processor), which accumulates the telemetry data and potentially transmits the accumulated telemetry data to an external management agent. For example, the OOB manageability service microcontroller (OOB-MSM) is a shared/uncore unit that collects telemetry data from the cores and reports out the telemetry data to external management agents, such as a baseboard management controller (BMC). The telemetry data contains information (e.g., counter values) related to core instruction execution, environmental data (temperature, frequency, voltage), and cache operations.

Given that trusted execution environments (TEEs) need to be protected against side channel leakage through OOB telemetry data processing, there is a conflict between the requirement of confidentiality in trusted execution environments and the need for telemetry data collection for platform monitoring.

To address these conflicting requirements, embodiments of the invention control how telemetry data collected from trusted execution environments is reported out of the processor. In one particular embodiment, trusted execution awareness is extended from the core to the shared or "uncore" region of the processor. As used herein, the "uncore" region comprises any circuitry outside of the processing cores (e.g., the CPU cores) including, by way of example and not limitation, the on-chip interconnect, memory controllers, shared caches (e.g., the L3 cache), I/O interfaces, graphics processing circuitry, and SoC power/performance management controllers.

In one implementation, a security policy is defined allowing All, None, or Some telemetry data during trusted execution, providing a balance between the need for telemetry data and the security requirements of the type/instance of trusted execution environment. In one implementation, the security policy supports a telemetry class tier to provide the indication of telemetry exposure. For example, the security policy may be specified in a contract between a cloud service provider (CSP) and customer which indicates telemetry exposure from a TEE (or each type of TEE), including the ability to configure multiple tiers of subsets of SoC telemetry. Each telemetry subset is runtime-configurable via a signed permit which defines the security policy with different in-band and out-of-band access. The permit may be created by the CSP based on the contract between the CSP and the customer. In implementations where a single SoC supports multiple tiers of telemetry, the most constraining security policy is applied. In some embodiments, the telemetry exposure is defined, at least in part, based on functions which add configurable SNR (signal-to-noise ratio) via a permit as described herein.

### Telemetry from Trusted Execution Environment

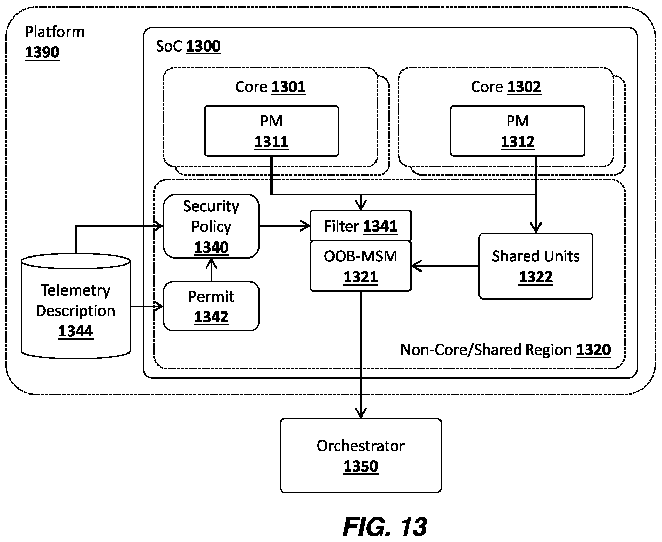

**FIG. 13** illustrates an example SoC 1300 within a platform 1390 in which telemetry metrics are generated/collected by platform monitoring (PM) agents 1311-1312 within the cores 1301-1302, respectively, and transmitted over out-of-band or in-band channels to a telemetry aggregator. In one implementation, the telemetry data is transmitted to an out-of-band management service module (OOB-MSM) 1321 configured in the uncore/shared region 1320 of the SoC 1300 which aggregates telemetry data provided by the platform monitoring agents 1311-1312 and potentially one or more other units 1322 within the uncore/shared region 1320. In this implementation, a filter 1341 operating in accordance with a configurable security policy 1340 prevents certain telemetry data from being aggregated by the OOB-MSM, such as telemetry data associated with trusted execution environments. The OOB-MSM 1321 reports the aggregated telemetry data out to external agents, such as an orchestrator 1350 or baseboard management controller (BMC) using in-band and/or out-of-band channels (e.g., in accordance with a telemetry API).

In one embodiment, the PM agents 1311-1312 of the cores 1301-1302, respectively, send telemetry data periodically over out-of-band channels to uncore units 1322 and/or the OOB-MSM 1321, which aggregates the telemetry data from all sources and reports to the remote agent 1350 periodically and/or on demand. Alternatively, or additionally, the telemetry data may be sent asynchronously, based on a defined event trigger on the Core (e.g., scheduling a new workload on the IP core). In a trusted environment, only the cores 1301-1302 are aware of trusted environment execution state and can enter and exit the TEE based on the sequence of instructions being processed. In one particular implementations, the core flows that cause it to enter TEE mode include, but are bit limited to:
- ACM launch - GETSEC[SENTER], GETSEC[ENTERACCS], ACM launch at reset (for Boot Guard)
- SGX enclave entry - ENCLU[EENTER], ENCLU[ERESUME]
- SEAM module entry - SEAMCALL, TD VM exit

The core flows that cause it to exit TEE mode include:
- ACM teardown - GETSEC[EXITAC]
- SGX enclave exit - ENCLU[EEXIT], Asynchronous enclave exit (AEX)
- SEAM module exit - SEAMRET, TD VM entry into PMT-profiled TD)

Building the TEE execution awareness in the cores 1301-1302 requires tracing of any potential TEE nesting. Currently, the cores 1301-1302 support the TEE nesting as shown in the table below. The notion of TEE nesting is critical to properly manage the "in TEE" execution context.

| **To From** | SEAM module (IN_TEE=1) | TD (IN_TEE=0/1) | SGX Enclave (IN_TEE=1) | ACM (IN_TEE=1) |
|---|---|---|---|---|
| SEAM module (IN_TEE=1) | Cannot happen - SEAMCALL in SEAM root mode raises #UD | OK - TD VM entry | Should not happen - SEAM modules do not enter SGX | Cannot happen - SENTER/ ENTERACCS in SEAM root mode raises #GP |
| TD (IN_TEE=0/1) | OK - TD VM exit | Cannot happen - VMLAUNCH/VMR ESUME in SEAM non-root mode causes TD VM exit | Should not happen - SGX is not supported in TDs, so TDs don't enter enclaves | Cannot happen - SENTER/ENTERACCS in SEAM non-root mode causes TD VM exit |
| SGX enclave (IN_TEE=1) | Cannot happen - SEAMCALL in ring 3 raises #GP | Cannot happen - VMLAUNCH/ VMRESUME in ring 3 raises #GP | Cannot happen EENTER/ ERESUME in enclaves raises #UD | Cannot happen - SENTER/ ENTERACCS in ring 3 raises #GP |
| ACM (IN_TEE=1) | Cannot happen - ACMs run out of VMX mode, SEAMCALL out of VMX mode raises #UD | Cannot happen - ACMs run out of VMX mode, VMLAUNCH/ VMRESUME out of VMX mode raises #UD | Should not happen - SGX is not supported in ACMs, so ACM do not enter enclaves | Cannot happen - SENTER/ENTERACCS in ACM raises #GP |

### SoC Awareness for "in TEE" context

Management of the execution context within a trusted execution environment (i.e., the "in TEE" context) is typically localized to the core execution engine(s) associated with the TEE. Thus, proper handling of telemetry in the SoC requires construction of an "in TEE" awareness for the SoC telemetry aggregator, which may be integral to the OOB-MSM or other shared SoC component. With more advanced telemetry metrics such as per-VM or per-workload metrics, across-SoC awareness for the TEE context is needed. Specific VMs and workloads can run across several execution engines at the same time while being evicted for I/O operations.

In one embodiment, each core 1301-1302 passes TEE context awareness information to presentation layer circuitry, which filters telemetry data packets that are potentially tainted with TEE context information. In this embodiment, the associated core 1301-1302 implements a tainted packet counter (TPC), an 8-bit (or more) counter that increments when the core executes in the TEE. The counter value is passed to the telemetry aggregator (e.g., within the OOB-MSM) using a periodic information packet sent over the potentially lossy fabric interconnect within SoC. A bit flag may be used instead of or in addition to a counter. However, a counter is used in some embodiments instead of a bit flag to support filtering frequent TEE entry-exit flows and to manage the case when the telemetry information packet or specific update of telemetry metric is lost by the fabric or by the message buffering mechanism. Embodiments of the invention may be implemented on SoCs with different types of fabric interconnects and buffering mechanisms, including but not limited to those for which there is no delivery guarantee and/or those associated with specifically tailored attacks to expose telemetry. For example, lossy messaging protocols may be used and the potential message loss may be compensated for at the metric level. These embodiments may be used for tracing as well as telemetry, and in any other circumstances in which instruction/data processing metrics are needed.

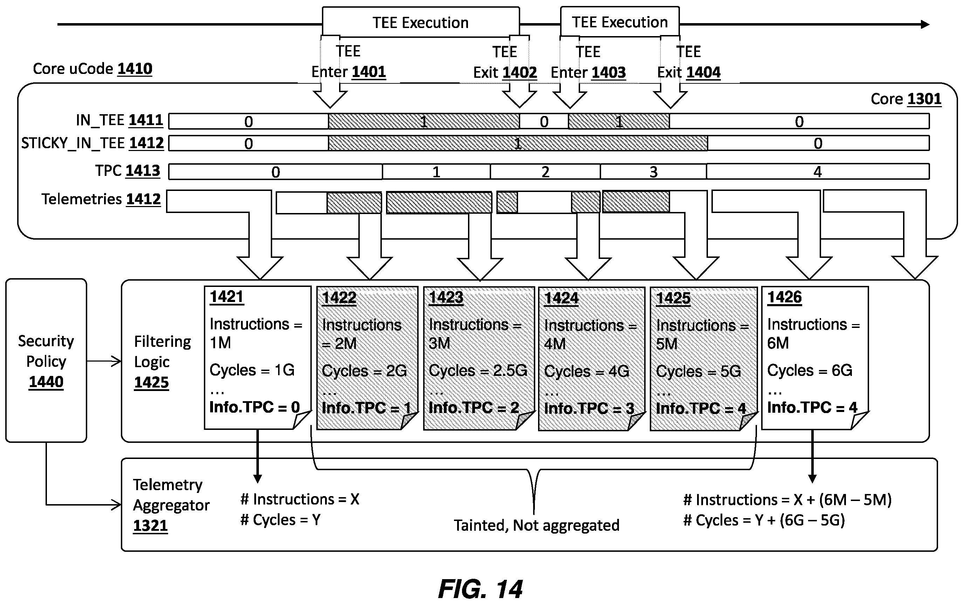

**FIG. 14** illustrates one embodiment including filtering logic 1425 and a telemetry aggregator 1321, one or both of which may be integrated within an OOB-MSM or other SoC-level component. In one embodiment, packet filtering is performed by the filtering logic 1425 and aggregation of unfiltered telemetry data is performed by the telemetry aggregator 1321.

In the illustrated example, a core 1301 is shown executing different sequences of microcode (uCode) 1410, including an IN_TEE bit 1411 to indicate when the core is executing in TEE mode (e.g., 1401, 1403) and a STICKY_IN_TEE bit 1412 to indicate when the core is executing in TEE mode and remains set for a period of time after TEE execution has ended (i.e., is not immediately reset on a TEE exit 1402, 1404). A tainted packet counter (TPC) 1413 counts when the core is in a TEE mode and various telemetry data 1412 is transmitted to the telemetry aggregator 1321 in periodic telemetry packets 1421-1426. In this example, when the core 1301 enters TEE mode at 1401 and 1403, the TPC 1413, which is included in the periodic telemetry info packets 1421-1422 starts incrementing to indicate that telemetry packets 1422-1425 received by the telemetry aggregator 1321 are tainted because they contain telemetry data collected while the core was executing in TEE mode.

In one embodiment, the filtering logic 1425 determines whether each particular telemetry packet 1421-1426 should be filtered (and not aggregated), whether a defined SNR (telemetry conditioning) should be added,and/or whether the telemetry packed should be passed through for inclusion in the aggregated telemetry data based on the defined security policy 1440. While shown outside the telemetry aggregator 1321 in FIG. 14, the filtering logic 1425 may be implemented as an integral circuit within the telemetry aggregator 1321 (e.g., within OOB-MSM circuitry).

In one embodiment, based on the security policy 1440, any telemetry data from tainted packets 1422-1425 is not aggregated and is filtered by the filtering logic 1425. The unified modeling language (UML) code sequence below represents one implementation which also shows cases of lost packet handling. The filtering mechanism for tainted telemetry packets may also be enhanced to add a user-defined noise level instead of removing all tainted samples from the aggregated telemetry metrics.

```
 @startuml
 skinparam sequenceMessageAlign center
 participant "Core PUSH\n Telemetry" as core
 box "Ocode" #LightGreen
 participant "Data processing layer\n(Telemetry aggregation)" as
 ocode
 participant "Presentation layer\n(PMT API)" as pmt
 end box
 autonumber
 rnote over core, ocode
 Initial conditions: TPC = 0, in_TEE = 1'b0. No telemetry or info
 packet arrived yet.
 All previous counter values are 0, all deltas are 0, all per
 counter TPC are 0.
 (TPC == Tainted Packet Counter, or in_TEE counter)
 end rnote
 ocode -> pmt : No Info packet assume TPC=0
 core -> ocode : Telemetry counter A=10 packet (first)
 ocode -> pmt : Store A.Previous = 10; calculate A.Delta=10;
 store A.TPC=0
 core -> ocode : Telemetry counter B=12 packet
 ocode -> pmt : Store B.Previous = 12; calculate B.Delta=12;
 store B.TPC=0
 core -> ocode : Telemetry counter C=23 packet
 ocode -> pmt : Store C.Previous = 23; calculate C.Delta=23;
 store B.TPC=0
 rnote over ocode
 Until first info packet arrives, MSM Aggregator only calculates
 the internal counter values. PMT stores per-counter TPC value.
 end rnote
 core -> pmt : Info packet. TPC=0
 activate pmt
 pmt -> pmt : Expose counters A,B and C\n set A.TPC=0,
 B.TPC=0,C.TPC=0,PrevTPC=0
 core -> ocode : Telemetry counter A=15 packet
 deactivate pmt
 ocode -> pmt : Store A.Previous = 15; calculate A.Delta=5
 core -> core : Core enters TEE mode\nin_TEE=1
 activate core
 core -> ocode : Telemetry counter B=20 packet
 ocode -> pmt : Store B.Previous = 20; calculate B.Delta=8
 core -> ocode : Telemetry counter C=32 packet
 ocode -> pmt : Store C.Previous = 32; calculate C.Delta=9
 core -> pmt : Info packet. TPC=1
 activate pmt
 rnote over pmt
 Packet is tainted. No telemetry shall be exposed.
 end rnote
 pmt -> pmt : A.TPC != TPC\n A.Delta=0 and A.TPC=1
 pmt -> pmt : B.TPC != TPC\n B.Delta=0 and B.TPC=1
 pmt -> pmt : C.TPC != TPC\n C.Delta=0 and C.TPC=1
 core -> ocode : Telemetry counter A=21 packet
 deactivate pmt
 ocode -> pmt : Store A.Previous = 21; calculate A.Delta=6
 core -x ocode : Telemetry counter B=24 packet
 rnote over ocode: Packet lost. B.Previous=20
 core -> core : Core exits TEE mode\nin_TEE=0
 deactivate core
 core -> ocode : Telemetry counter C=36 packet
 ocode -> pmt : Store C.Previous = 36; calculate C.Delta=4
 core -> pmt : Info packet. TPC=2
 activate pmt
 rnote over pmt
 Packet is tainted. No telemetry shall be exposed. B.TPC
 is not updated, since counter B was lost. (B.TPC=1)
 end rnote
 pmt -> pmt : A.TPC != TPC\n A.Delta=0 and A.TPC=2
 pmt -> pmt : C.TPC != TPC\n C.Delta=0 and C.TPC=2
 core -> ocode : Telemetry counter A=30 packet
 deactivate pmt
 ocode -> pmt : Store A.Previous = 30; calculate A.Delta=9
 core -> ocode : Telemetry counter B=42 packet
 ocode -> pmt : Store B.Previous = 42; calculate B.Delta=22
 core -> ocode : Telemetry counter C=40 packet
 ocode -> pmt : Store C.Previous = 40; calculate C.Delta=4
 core -> pmt : Info packet. TPC=2
 activate pmt
 rnote over pmt
 Packet is not tainted, but counter B was lost and now the delta
 contains the tainted cycles. Ocode cannot expose counter
 (B.TPC=1)
 (Ocode detected B.TPC counter increase)
 end rnote
 pmt -> pmt : Expose aggregated\ncounters A and C
 pmt -> pmt : B.TPC != TPC\nB.Delta=0 and B.TPC=2
 deactivate pmt
 @enduml
```

One embodiment of OOB-MSM filtering logic is implemented by the OOB-MSM presentation layer as described in the below code sequence. In this embodiment, the OOB-MSM presentation layer performs the filtering of telemetry data.

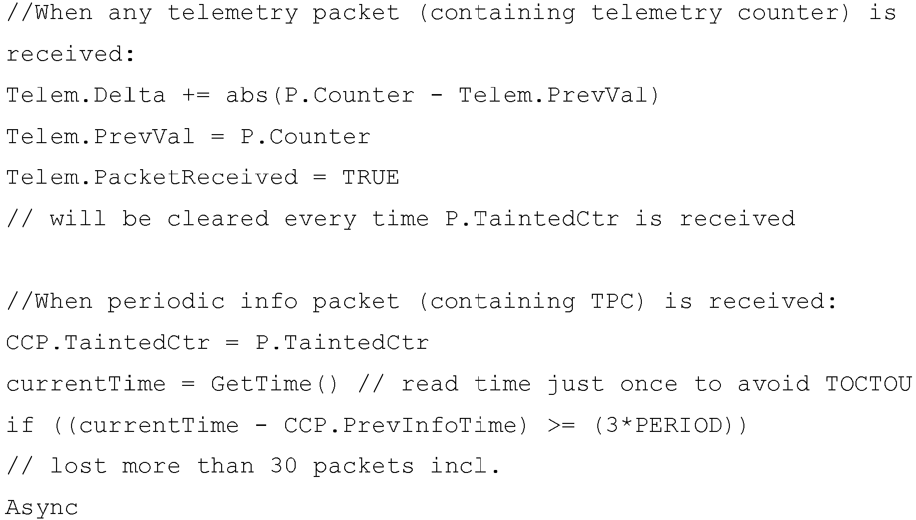

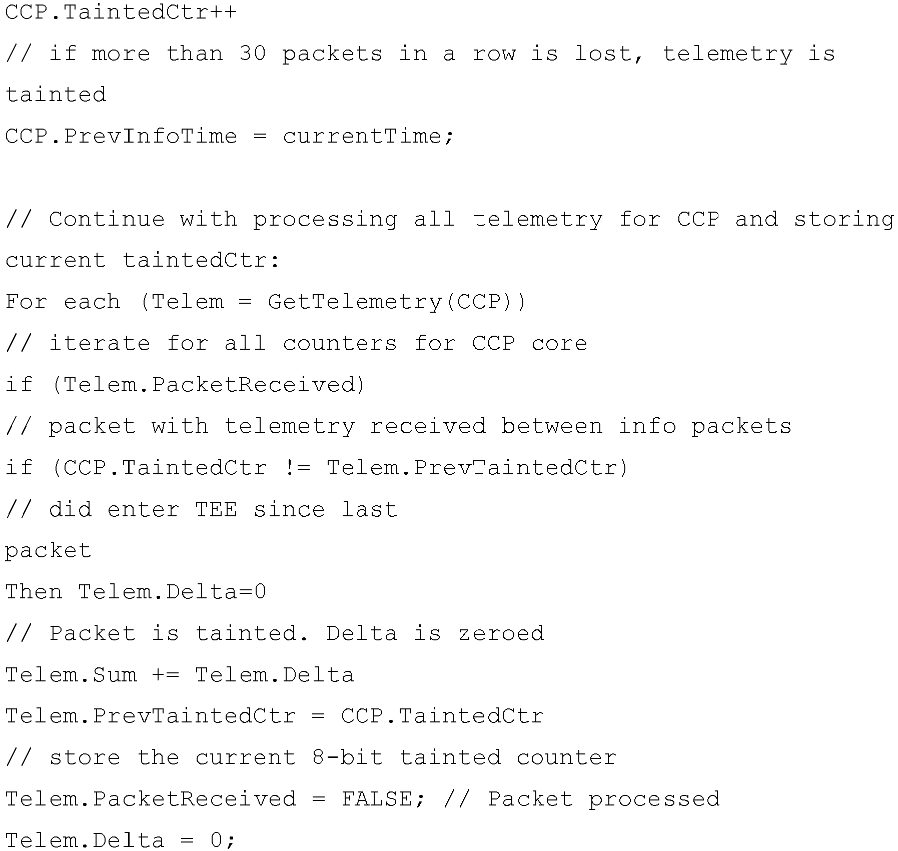

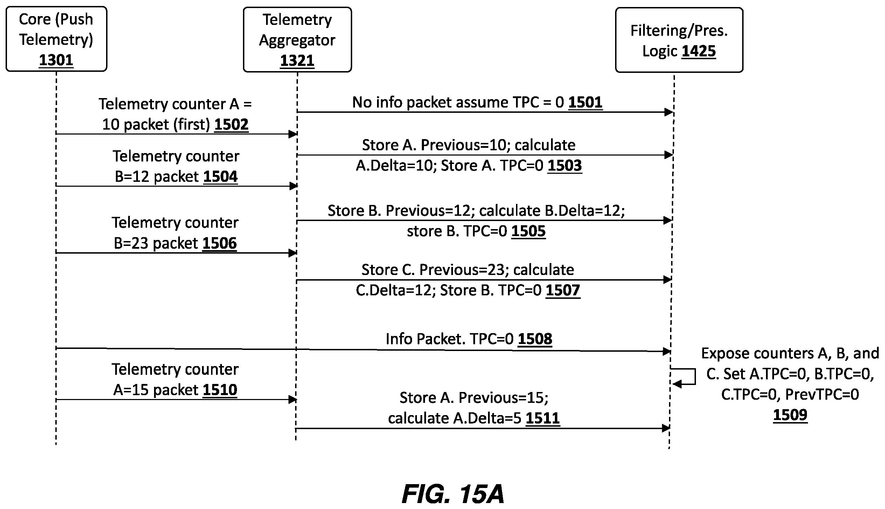

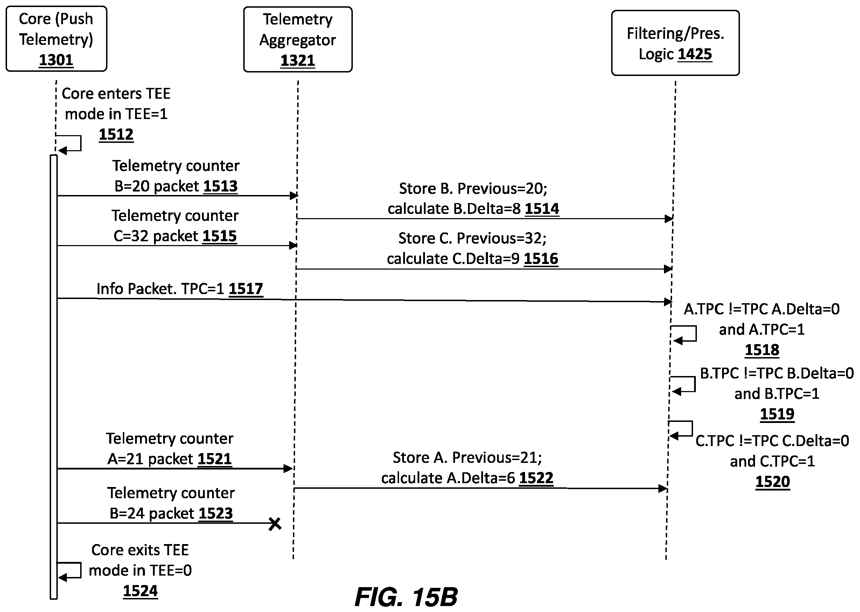

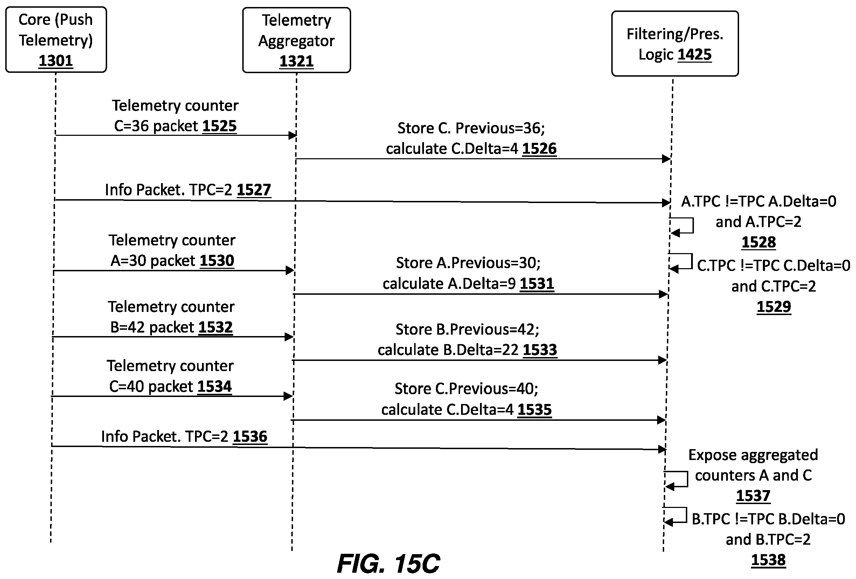

FIGS 15A-C illustrate an example set of transactions between the core 1301, telemetry aggregator 1321, and presentation layer 1425 in accordance with some embodiments of the invention. In some implementations, the telemetry aggregator 1321 and presentation logic 1425 comprise circuits within an OOB-MSM, although the underlying principles of the invention are not limited to any particular arrangement for these components.

The initial conditions are as follows: the tainted packet counter (TPC) is 0, as indicated at 1501; the in TEE bit is 1; no telemetry or information packet has arrived yet; all previous counter values, all deltas, and all per counter TPCs are 0. Until the first telemetry packet arrives, the telemetry aggregator 1321 only receives the internal counter values. In the illustrated example, this includes counter values for telemetry counter A at 1502, telemetry counter B at 1504, and telemetry counter C at 1506. In each case, the telemetry aggregator 1321 transmits an indication of the counter value and the counter value delta (i.e., the change in the counter) to the presentation logic 1425, represented in transactions 1503, 1505, and 1507, which stores each respective counter value.

Thus, until the first information packet arrives, the telemetry aggregator 1321 only calculates the internal counter values and the presentation logic stores per-counter TPC values A.TPC, B.TPC, and C.TPC (all initially set to 0).

In response to the first telemetry information packet at 1508, which indicates the unchanged TPC value of 0, the presentation logic 1425 exposes the counter values for counters A, B, and C and sets corresponding TPC values to 0 (i.e., Set A.TPC=0, B.TPC=0, C.TPC=0).

At 1510, the core transmits an updated counter value for counter A to the telemetry aggregator. At 1511, the telemetry aggregator communicates the new value of counter A and the delta for counter A to the presentation logic 1425.

The core 1301 enters TEE mode at 1512, setting the TEE bit to 1 to indicate the TEE mode, and transmits updated counter values for counter B and C at 1513 and 1515, respectively, to the telemetry aggregator 1321, which transmits corresponding messages containing the updated counter values to the presentation logic 1425 at 1514 and 1516, respectively.

At 1517, the core pushes a telemetry information packet to the presentation logic 1425 with an updated TPC value of 1. The incremented TPC value indicates to the presentation logic 1425 that the core 1301 has entered TEE mode (i.e., because the TPC only increments when in TEE mode). The presentation logic 1425 records the TPC value of 1 and resets the delta values to 0 for each of the three counters at 1518-1520.

At 1521 and 1523, the core pushes updated counter values for counters A and B, respectively, to the telemetry aggregator. At 1522, the telemetry aggregator 1321 transmits the updated counter value and delta value for counter A to the presentation logic 1425. However, the packet containing the value for counter B in transaction 1523 is lost. The core then exits TEE mode at 1524, changing the TEE bit to a value of 0 to indicate that TEE mode is no longer active.

At 1525, the core 1301 transmits a new value for counter C to the telemetry aggregator 1321, which passes the counter value and corresponding delta for counter C to the presentation logic 1425 at 1526.

At 1527, the core pushes a telemetry information packet to the presentation logic 1425 with an updated TPC value of 2. Because of the incremented TPC value, the presentation logic does not expose telemetry data, setting the delta values for counters A and C to 0. The TPC associated with counter B (B.TPC) is not updated because of the lost packet at 1523 with the counter B value.

At 1530, 1532, and 1534, the core 1301 transmits new counter values for counters A, B, and C, respectively, to the telemetry aggregator 1321, which transmits corresponding messages 1531, 1533, and 1535 to the presentation logic 1425, containing the new counter values and delta values.

At 1536, the core 1301 transmits a new information packet with the same TPC value as transmitted at 1527, indicating that the core 1301 is no longer in TEE mode (which would be identified with an incrementing TPC counter value). Thus, at 1537, the presentation logic 1537 exposes aggregated counter values for counters A and C and, because of the lost packet with counter B data at 1523, resets the delta value for counter B to 0 and sets TPC associated with counter B to 2.

### Protection from message storms

In one embodiment, the TPC is an 8-bit counter which wraps every 256 telemetry update periods. Thus, losing fewer packets during the TEE will not cause telemetry leakage. In some implementations, any more significant loss of samples is detected using timestamps - i.e., measuring the time when the previous message was received. The use of the relatively small 8-bit counter with the addition of timestamps protects the telemetry data from any potential message storms or side-channel attacks. When an extensive loss of messages is detected using timestamps, one embodiment of the telemetry aggregator assumes that the samples were collected during "in TEE" execution on the specific execution engine.

### Controlling telemetry exposure from TEE by workload owner

Certain embodiments allow for per-workload control of telemetry exposure by the TEE. For example, with these embodiments, the TEE workload owner has the option to allow or deny the collection of telemetry for the TEE. If such telemetry is allowed then aggregation of telemetry from the TEE is performed, even if trusted execution context data is recorded. In some embodiments, the configuration options are included in the trust domain (TD) manifest which can be updated by the workload owner to enforce the specific settings for telemetry collection.

Trust domain attestation operations may be relied on by these embodiments. In one embodiment, the externally-visible trust domain attribute "PMT-profiled" is defined to provide for the collection of telemetry data for cloud service providers (CSPs). In one embodiment, trust domain attestation operates as follows:
- The host VMM determines whether to set this attribute per trust domain. This determination may be based on the trust domain manifest, cloud service provider policy, and potentially other variables.
- The trust domain report verifier determines whether a profiled trust domain is trustworthy. This determination may be made, for example, based on trust domain requirements, knowledge of the cloud service provider, and potentially additional variables.

Embodiments of the invention allow multiple policies to be defined. Thus, the workload owner can decide on the specific subset of telemetry exposure for each trust domain.

### Controlling telemetry exposure from the TEE

The periodic information packets 1421-1426 sent by the core 1301 may also be used to communicate the telemetry policy. The telemetry policy combined with the "in TEE" awareness may then be used by the presentation logic 1425 to implement configurable control over the telemetry exposure policy (e.g., based on configuration options specified by a CSP). The presentation logic 1425 applies the telemetry policy when cores 1301 collect telemetry data during "in TEE" execution. Based on the telemetry policy, only certain telemetry classes are exposed by the presentation layer 1425 during the "in TEE" execution. In some implementations, the telemetry policies are dynamically generated at runtime based on a permit (e.g., an OEM permit), which is a contract between an OEM/CSP and customer (e.g., the workload owner) allowing a certain subset of telemetries to be exposed in the TEE.

An example of a permit is provided in the following unified modeling language (UML) class code:

```
@startuml
 class TelemetryXML_DMR {
 -GUID
 - -
 #Container1
 #Container2
 #Container3
 #Container4
 #Container5
 - -
 -Signature
 }
 Interface TelemetryPermit_CSP {
 -class {"Class All, "Tier1", "Tier2"
 -GUID
 - -
 #Container1_enabled bit
 #Container2_enabled bit
 #Container3_enabled bit
 #Container4_enabled bit
 #Container5_enabled bit
 - -
 -Hash "hash of TelemetryXML_DMR"
 -OEMSingature
 }
 Note right
 Permit provisioned into SoC in runtime
 Signed by CSP.
 Future: SNR (function and noise level)
 endnote
 Protocol SPDM_Hash {
 #HashSoCFW
 #HashACM
 #TelemetryPermitAll
 #TelemetryPermitTier1
 #TelemetryPermitTier2
 -SPDM_GetMeasurements()
 }
 Note right
 Permit Hash in runtime reported via SPDM GetMeasurements()
 Each permit is reported as a separate Hash
 endnote
 TelemetryXML_DMR "1" *-- "many" TelemetryPermit_CSP :drives <
 TelemetryPermit_CSP "many" o-- "1" SPDM_Hash : aggregate >
 @enduml
```

In one embodiment, a telemetry superset description is provided (e.g., in a set of XML files or using another format). Based on this superset description, an OEM/CSP can generate a permit indicating a subset of the telemetry data that will be available in the TEE. This permit may be protected, for example, by signing using an X.509 certificate. The permit is provisioned to an SoC which uses the permit to generate the telemetry policy, which is then implemented by the presentation logic 1425. For example, the presentation logic uses the telemetry policy to detect TEE execution and make a decision as to whether to expose certain telemetries. Multiple policies can be configured on a single SoC or a system containing the SoC, enabling multi-tier telemetry level reporting.

In one implementation, a basic policy is specified which allows filtering of certain telemetries associated with the TEE. More advanced policies may be specified which enable (among other things) telemetry conditioning based on a specified permit. Telemetry conditioning refers to modifying telemetry data (e.g., by adding predefined random noise) to reduce telemetry accuracy and make it less vulnerable to side channel attacks. In one embodiment, the telemetry policy can define a specific signal-to-noise ratio (SNR) threshold for certain telemetry data. For example, certain telemetries can either be disabled or filtered (e.g., if the associated SNR is below the threshold) or made less accurate when the core is in TEE mode.

As mentioned, the permit may be protected with signatures and/or certificates (e.g., an X.509 certificate). In one particular implementation, permits can be verified by the workload owner (or other entity) using the attestation capabilities defined in the Security Protocol and Data Model (SPDM) architecture. For example, in some embodiments, the SoC reports permit hashes as SoC measurements that can be obtained during the SPDM SoC attestation flow.

Thus, embodiments of the invention provide mechanisms to entities such as CSPs and workload owners to control telemetry exposure, enabling full transparency and knowledge related to telemetry exposure. These embodiments also enable multi-tier trusted compute platforms in which each tier supports distinct levels of telemetry exposure depending on the plan (tier) purchased by the workload owner from the CSP, which can range from completely blocked telemetry to a fully managed platform. The workload owner will also be provided with the ability to attest to the level of telemetry exposure.

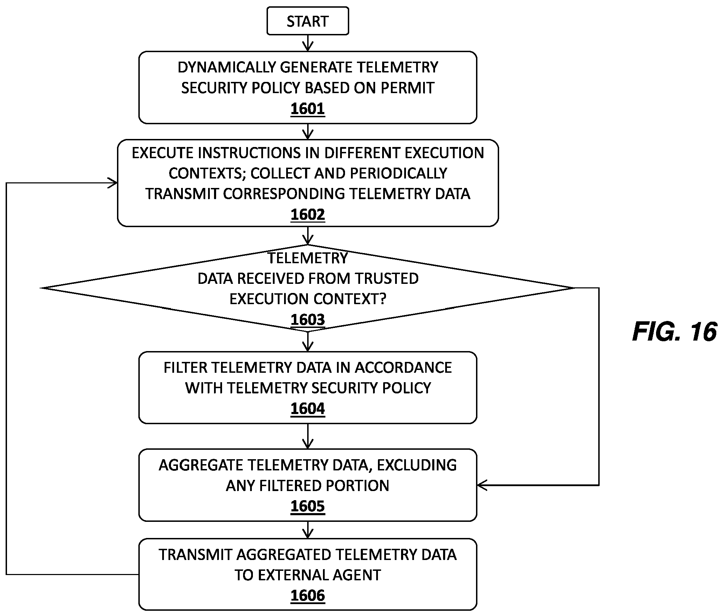

A method in accordance with one embodiment of the invention is illustrated in FIG. 16. The method may be implemented on the various architectures described herein, but is not limited to any specific processor or system architecture.

At 1601, a telemetry security policy is generated based on a permit. As mentioned, the permit may be specified in UML code or other data format. At 1602, instructions are executed in different execution contexts, including a trusted execution context and corresponding telemetry data is collected and periodically transmitted.

If telemetry data is received from a trusted execution context, determined at 1603, then at 1604 the telemetry data is filtered in accordance with the telemetry security policy. In either case, at 1605, the telemetry data is aggregated, excluding any portion which is filtered based on the security policy. In some embodiments described above, for example, filtering is performed by circuitry within the shared region of the SoC. At 1606, the aggregated telemetry data is transmitted to an external agent, such as an orchestrator or BMC.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope of the invention should be judged in terms of the claims which follow.

## Claims

1. A processor, comprising:
a plurality of processing cores (1301, 1302) to execute instructions in different execution contexts, including a trusted execution context associated with a trusted execution environment;
telemetry aggregation circuitry (1321) to aggregate telemetry data associated with one or more of the different execution contexts;
filtering circuitry (1341) to prevent at least a portion of the telemetry data associated with the trusted execution context from being aggregated by the telemetry aggregation circuitry (1321); and
an interface to communicate the telemetry data aggregated by the telemetry aggregation circuitry (1321) to an external agent, wherein the filtering circuitry (1341) comprises circuitry configurable based on a specified telemetry security policy (1340), wherein the telemetry security policy (1340) is provided in a cryptographically-protected permit (1342), and the filtering circuitry (1341) is configured to filter all or a specified subset of the telemetry data associated with the trusted execution context in accordance with the telemetry security policy (1340) specified in the cryptographically-protected permit (1342), wherein the processor further comprises a tainted packet counter (TPC) associated with each processing core (1301, 1302), the TPC configured to increment when the corresponding processing core executes in the trusted execution context.

2. The processor of claim 1 wherein the telemetry security policy (1340) comprises an indication that the filtering circuitry (1341) is to filter all or a specified subset of the telemetry data associated with the trusted execution context.

3. The processor of claim 1 wherein the cryptographically-protected permit (1342) comprises a data structure formatted in accordance with particular a modeling language or markup language to specify parameters for the telemetry security policy (1340) and cryptographically-protected with a signature.

4. The processor of claim 3 wherein the telemetry security policy (1340) is dynamically generated in a runtime of one of the execution contexts based on the cryptographically-protected permit (1342).

5. The processor of any of claims 1 to 4 further comprising:
a plurality of counters, each counter associated with a processing core (1301, 1302) or the plurality of processing cores (1301, 1302) and configured to increment or decrement when the corresponding processing core (1301, 1302) executes instructions in the trusted execution context.

6. The processor of any of claims 1 to 5 further comprising:
a plurality of agents corresponding to the plurality of processing cores (1301, 1302), each agent to transmit a portion of the telemetry data associated with a corresponding processing core (1301, 1302).

7. The processor of any of claims 1 to 6 wherein the interface comprises an out-of-band interface accessible to the external agent via an application programming interface (API).

8. A method comprising:
executing instructions in different execution contexts on a plurality of processing cores (1301, 1302), the execution contexts including a trusted execution context associated with a trusted execution environment;
for each processing core (1301, 1302), maintaining a tainted packet counter (TPC) associated with the processing core, the TPC being incremented when the processing core executes in the trusted execution context;
transmitting telemetry data from one or more processing cores (1301, 1302) of the plurality of processing cores (1301, 1302) in the different execution contexts, the telemetry data being associated with the value of the TPC;
filtering at least a portion of the telemetry data associated with the trusted execution context from being aggregated by a telemetry aggregation circuit, the telemetry aggregation circuit to aggregate telemetry data associated with one or more of the different execution contexts excluding the portion of telemetry data which is filtered; and
communicating the telemetry data aggregated by the telemetry aggregation circuit to an external agent, wherein a telemetry security policy (1340) is provided in a cryptographically-protected permit (1342), and the filtering includes filtering all or a specified subset of the telemetry data associated with the trusted execution context in accordance with the telemetry security policy (1340) specified in the cryptographically-protected permit (1342).

9. The method of claim 8 wherein the filtering is performed by circuitry configurable based on a specified telemetry security policy (1340).

10. The method of claim 9 wherein the telemetry security policy (1340) comprises an indication that the filtering circuitry (1341) is to filter all or a specified subset of the telemetry data associated with the trusted execution context.

11. The method of claim 9 or 10 wherein the telemetry security policy (1340) is provided in a cryptographically-protected permit (1342).

12. The method of claim 11 wherein the cryptographically-protected permit (1342) comprises a data structure formatted in accordance with particular a modeling language or markup language to specify parameters for the telemetry security policy (1340) and cryptographically-protected with a signature.

13. At least one machine readable medium having program code stored thereon which, when executed by one or more processors, causes the one or more processors to perform operations comprising:
executing instructions in different execution contexts on a plurality of processing cores (1301, 1302), the execution contexts including a trusted execution context associated with a trusted execution environment;
for each processing core (1301, 1302), maintaining a tainted packet counter (TPC) associated with the processing core, the TPC being incremented or updated when the processing core executes in the trusted execution context;
transmitting telemetry data from one or more processing cores (1301, 1302) of the plurality of processing cores (1301, 1302) in the different execution contexts, the telemetry data being associated with the value of the TPC;
filtering at least a portion of the telemetry data associated with the trusted execution context from being aggregated by a telemetry aggregation circuit, the telemetry aggregation circuit to aggregate telemetry data associated with one or more of the different execution contexts excluding the portion of telemetry data which is filtered; and
communicating the telemetry data aggregated by the telemetry aggregation circuit to an external agent, wherein a telemetry security policy (1340) is provided in a cryptographically-protected permit (1342), and the filtering includes filtering all or a specified subset of the telemetry data associated with the trusted execution context in accordance with the telemetry security policy (1340) specified in the cryptographically-protected permit (1342).

## Patentansprüche

1. Prozessor, umfassend:
eine Mehrzahl von Verarbeitungskernen (1301, 1302) zum Ausführen von Anweisungen in unterschiedlichen Ausführungskontexten, einschließlich eines vertrauenswürdigen Ausführungskontexts, der mit einer vertrauenswürdigen Ausführungsumgebung assoziiert ist;
eine Telemetrieaggregationsschaltungsanordnung (1321) zum Aggregieren von Telemetriedaten, die mit einem oder mehreren der unterschiedlichen Ausführungskontexte assoziiert sind;
eine Filterschaltungsanordnung (1341) zum Verhindern, dass mindestens ein Teil der Telemetriedaten, die mit dem vertrauenswürdigen Ausführungskontext assoziiert sind, durch die Telemetrieaggregationsschaltungsanordnung (1321) aggregiert wird; und
eine Schnittstelle zum Kommunizieren der Telemetriedaten, die durch die Telemetrieaggregationsschaltungsanordnung (1321) aggregiert werden, an einen externen Agenten, wobei die Filterschaltungsanordnung (1341) eine Schaltung umfasst, die basierend auf einer spezifizierten Telemetriesicherheitsrichtlinie (1340) konfigurierbar ist, wobei die Telemetriesicherheitsrichtlinie (1340) in einer kryptografisch geschützten Genehmigung (1342) bereitgestellt wird, und wobei die Filterschaltungsanordnung (1341) konfiguriert ist, um alle oder eine spezifizierte Teilmenge der Telemetriedaten, die mit dem vertrauenswürdigen Ausführungskontext assoziiert sind, gemäß der Telemetriesicherheitsrichtlinie (1340), die in der kryptografisch geschützten Genehmigung (1342) spezifiziert wird, zu filtern, wobei der Prozessor ferner einen markierten Paketzähler (TPC) umfasst, der mit jedem Verarbeitungskern (1301, 1302) assoziiert ist, wobei der TPC konfiguriert ist zum Hochzählen, wenn der entsprechende Verarbeitungskern in dem vertrauenswürdigen Ausführungskontext ausgeführt wird.

2. Prozessor nach Anspruch 1, wobei die Telemetriesicherheitsrichtlinie (1340) eine Anzeige umfasst, dass die Filterschaltungsanordnung (1341) geeignet ist, um alle oder eine spezifizierte Teilmenge der Telemetriedaten zu filtern, die mit dem vertrauenswürdigen Ausführungskontext assoziiert sind.

3. Prozessor nach Anspruch 1, wobei die kryptografisch geschützte Genehmigung (1342) eine Datenstruktur umfasst, die gemäß einer bestimmten Modellierungssprache oder Auszeichnungssprache formatiert ist, um Parameter für die Telemetriesicherheitsrichtlinie (1340) zu spezifizieren, und die kryptografisch mit einer Signatur geschützt ist.

4. Prozessor nach Anspruch 3, wobei die Telemetriesicherheitsrichtlinie (1340) in einer Laufzeit eines der Ausführungskontexte basierend auf der kryptografisch geschützten Genehmigung (1342) dynamisch erzeugt wird.

5. Prozessor nach einem der Ansprüche 1 bis 4, der ferner umfasst:
eine Mehrzahl von Zählern, wobei jeder Zähler mit einem Verarbeitungskern (1301, 1302) oder der Mehrzahl von Verarbeitungskernen (1301, 1302) assoziiert ist und konfiguriert ist zum Hochzählen oder zum Runterzählen, wenn der entsprechende Verarbeitungskern (1301, 1302) Anweisungen in dem vertrauenswürdigen Ausführungskontext ausführt.

6. Prozessor nach einem der Ansprüche 1 bis 5, der ferner umfasst:
eine Mehrzahl von Agenten, die der Mehrzahl von Verarbeitungskernen (1301, 1302) entspricht, wobei jeder Agent geeignet ist, um einen Teil der Telemetriedaten zu übertragen, die mit einem entsprechenden Verarbeitungskern (1301, 1302) assoziiert sind.

7. Prozessor nach einem der Ansprüche 1 bis 6, wobei die Schnittstelle eine bandexterne Schnittstelle umfasst, die für den externen Agenten über eine Anwendungsprogrammierschnittstelle (API) zugänglich ist.

8. Verfahren, umfassend:
Ausführen von Anweisungen in unterschiedlichen Ausführungskontexten in einer Mehrzahl von Verarbeitungskernen (1301, 1302), wobei die Ausführungskontexte einen vertrauenswürdigen Ausführungskontext beinhalten, der mit einer vertrauenswürdigen Ausführungsumgebung assoziiert ist;
für jeden Verarbeitungskern (1301, 1302), Beibehalten eines markierten Paketzählers (TPC), der mit dem Verarbeitungskern assoziiert ist, wobei der TPC hochgezählt wird, wenn der Verarbeitungskern in dem vertrauenswürdigen Ausführungskontext ausgeführt wird;
Übertragen von Telemetriedaten von einem oder mehreren Verarbeitungskernen (1301, 1302) aus der Mehrzahl von Verarbeitungskernen (1301, 1302) in den unterschiedlichen Ausführungskontexten, wobei die Telemetriedaten mit dem Wert des TPC assoziiert sind;
Filtern von mindestens einem Teil der Telemetriedaten, die mit dem vertrauenswürdigen Ausführungskontext assoziiert sind, damit sie nicht durch eine Telemetrieaggregationsschaltung aggregiert werden, wobei die Telemetrieaggregationsschaltung geeignet ist zum Aggregieren von Telemetriedaten, die mit einem oder mehreren der unterschiedlichen Ausführungskontexte assoziiert sind, mit Ausnahme des Teils der Telemetriedaten, der gefiltert wird; und
Kommunizieren der Telemetriedaten, die durch die Telemetrieaggregationsschaltung aggregiert werden, an einen externen Agenten, wobei eine Telemetriesicherheitsrichtlinie (1340) in einer kryptografisch geschützten Genehmigung (1342) bereitgestellt wird, und wobei das Filtern ein Filtern aller oder einer spezifizierten Teilmenge der Telemetriedaten beinhaltet, die mit dem vertrauenswürdigen Ausführungskontext assoziiert sind, gemäß der Telemetriesicherheitsrichtlinie (1340), die in der kryptografisch geschützten Genehmigung (1342) spezifiziert ist.

9. Verfahren nach Anspruch 8, wobei das Filtern durch eine Schaltungsanordnung durchgeführt wird, die basierend auf einer spezifizierten Telemetriesicherheitsrichtlinie konfigurierbar ist (1340).

10. Verfahren nach Anspruch 9, wobei die Telemetriesicherheitsrichtlinie (1340) eine Anzeige umfasst, dass die Filterschaltungsanordnung (1341) geeignet ist, um alle oder eine spezifizierte Teilmenge der Telemetriedaten zu filtern, die mit dem vertrauenswürdigen Ausführungskontext assoziiert sind.

11. Verfahren nach Anspruch 9 oder 10, wobei die Telemetriesicherheitsrichtlinie (1340) in einer kryptografisch geschützten Genehmigung (1342) bereitgestellt wird.

12. Verfahren nach Anspruch 11, wobei die kryptografisch geschützte Genehmigung (1342) eine Datenstruktur umfasst, die gemäß einer bestimmten Modellierungssprache oder Auszeichnungssprache formatiert ist, um Parameter für die Telemetriesicherheitsrichtlinie (1340) zu spezifizieren, und die kryptografisch mit einer Signatur geschützt ist.

13. Mindestens ein maschinenlesbares Medium, das einen Programmcode aufweist, der darin gespeichert ist und der, wenn er von einem oder mehreren Prozessoren ausgeführt wird, den einen oder die mehreren Prozessor veranlasst, Operationen durchzuführen, die umfassen:
Ausführen von Anweisungen in unterschiedlichen Ausführungskontexten in einer Mehrzahl von Verarbeitungskernen (1301, 1302), wobei die Ausführungskontexte einen vertrauenswürdigen Ausführungskontext beinhalten, der mit einer vertrauenswürdigen Ausführungsumgebung assoziiert ist;
für jeden Verarbeitungskern (1301, 1302), Beibehalten eines markierten Paketzählers (TPC), der mit dem Verarbeitungskern assoziiert ist, wobei der TPC hochgezählt oder aktualisiert wird, wenn der Verarbeitungskern in dem vertrauenswürdigen Ausführungskontext ausgeführt wird;
Übertragen von Telemetriedaten von einem oder mehreren Verarbeitungskernen (1301, 1302) aus der Mehrzahl von Verarbeitungskernen (1301, 1302) in den unterschiedlichen Ausführungskontexten, wobei die Telemetriedaten mit dem Wert des TPC assoziiert sind;
Filtern von mindestens einem Teil der Telemetriedaten, die mit dem vertrauenswürdigen Ausführungskontext assoziiert sind, damit sie nicht durch eine Telemetrieaggregationsschaltung aggregiert werden, wobei die Telemetrieaggregationsschaltung geeignet ist zum Aggregieren von Telemetriedaten, die mit einem oder mehreren der unterschiedlichen Ausführungskontexte assoziiert sind, mit Ausnahme des Teils der Telemetriedaten, der gefiltert wird; und
Kommunizieren der Telemetriedaten, die durch die Telemetrieaggregationsschaltung aggregiert werden, an einen externen Agenten, wobei eine Telemetriesicherheitsrichtlinie (1340) in einer kryptografisch geschützten Genehmigung (1342) bereitgestellt wird, und wobei das Filtern ein Filtern aller oder einer spezifizierten Teilmenge der Telemetriedaten beinhaltet, die mit dem vertrauenswürdigen Ausführungskontext assoziiert sind, gemäß der Telemetriesicherheitsrichtlinie (1340), die in der kryptografisch geschützten Genehmigung (1342) spezifiziert ist.

## Revendications

1. Processeur comprenant :
une pluralité de cœurs de traitement (1301, 1302) pour exécuter des instructions dans des contextes d'exécution différents, y compris un contexte d'exécution de confiance associé à un environnement d'exécution de confiance ;
des circuits d'agrégation de télémétrie (1321) pour agréger des données de télémétrie associées à un ou plusieurs des différents contextes d'exécution ;
des circuits de filtrage (1341) pour empêcher qu'au moins une partie des données de télémétrie associées au contexte d'exécution de confiance ne soit agrégées par les circuits d'agrégation de télémétrie (1321) ; et
une interface pour communiquer les données de télémétrie agrégées par les circuits d'agrégation de télémétrie (1321) à un agent externe, où les circuits de filtrage (1341) comprennent des circuits configurables sur la base d'une politique de sécurité de télémétrie spécifiée (1340), la politique de sécurité de télémétrie (1340) étant fournie dans un permis protégé cryptographiquement (1342), et les circuits de filtrage (1341) étant configurés pour filtrer tout ou un sous-ensemble spécifié des données de télémétrie associées au contexte d'exécution de confiance conformément à la politique de sécurité de télémétrie (1340) spécifiée dans le permis protégé cryptographiquement (1342), le processeur comprenant en outre un compteur de paquets entachés (TPC) associé à chaque cœur de traitement (1301, 1302), le TPC étant configuré pour s'incrémenter lorsque le cœur de traitement correspondant s'exécute dans le contexte d'exécution de confiance.

2. Processeur selon la revendication 1, dans lequel la politique de sécurité de télémétrie (1340) comprend une indication que les circuits de filtrage (1341) doivent filtrer la totalité ou un sous-ensemble spécifié des données de télémétrie associées au contexte d'exécution de confiance.

3. Processeur selon la revendication 1, dans lequel le permis protégé cryptographiquement (1342) comprend une structure de données formatée selon un langage de modélisation particulier ou un langage de balisage pour spécifier des paramètres pour la politique de sécurité de télémétrie (1340) et qui est protégée cryptographiquement par une signature.

4. Processeur selon la revendication 3, dans lequel la politique de sécurité de télémétrie (1340) est générée dynamiquement dans un temps d'exécution de l'un des contextes d'exécution sur la base du permis protégé cryptographiquement (1342).

5. Processeur selon l'une quelconque des revendications 1 à 4, comprenant en outre :
une pluralité de compteurs, chaque compteur étant associé à un cœur de traitement (1301, 1302) ou à la pluralité de cœurs de traitement (1301, 1302) et étant configuré pour s'incrémenter ou se décrémenter lorsque le cœur de traitement (1301, 1302) correspondant exécute des instructions dans le contexte d'exécution de confiance.

6. Processeur selon l'une quelconque des revendications 1 à 5, comprenant en outre :
une pluralité d'agents correspondant à la pluralité de cœurs de traitement (1301, 1302), chaque agent transmettant une partie des données de télémétrie associées à un cœur de traitement correspondant (1301, 1302).

7. Processeur selon l'une quelconque des revendications 1 à 6, dans lequel l'interface comprend une interface hors bande accessible à l'agent externe par l'intermédiaire d'une interface de programmation d'application (API).

8. Procédé comprenant les étapes suivantes :
exécuter des instructions dans différents contextes d'exécution sur une pluralité de cœurs de traitement (1301, 1302), les contextes d'exécution comprenant un contexte d'exécution de confiance associé à un environnement d'exécution de confiance ;
pour chaque cœur de traitement (1301, 1302), maintenir un compteur de paquets entachés (TPC) associé au cœur de traitement, le TPC étant incrémenté lorsque le cœur de traitement s'exécute dans le contexte d'exécution de confiance ;
transmettre des données de télémétrie depuis un ou plusieurs cœurs de traitement (1301, 1302) de la pluralité de cœurs de traitement (1301, 1302) dans les différents contextes d'exécution, les données de télémétrie étant associées à la valeur du TPC ;
filtrer au moins une partie des données de télémétrie associées au contexte d'exécution de confiance afin qu'elles soient agrégées par un circuit d'agrégation de télémétrie, le circuit d'agrégation de télémétrie permettant d'agréger les données de télémétrie associées à un ou plusieurs des différents contextes d'exécution, à l'exclusion de la partie des données de télémétrie qui sont filtrées ; et
communiquer les données de télémétrie agrégées par le circuit d'agrégation de télémétrie à un agent externe, une politique de sécurité de télémétrie (1340) étant fournie dans un permis protégé cryptographiquement (1342), et le filtrage comprenant le filtrage de la totalité ou d'un sous-ensemble spécifié des données de télémétrie associées au contexte d'exécution de confiance conformément à la politique de sécurité de télémétrie (1340) spécifiée dans le permis protégé cryptographiquement (1342).

9. Procédé selon la revendication 8, dans lequel le filtrage est effectué par des circuits configurables sur la base d'une politique de sécurité de télémétrie spécifiée (1340).

10. Procédé selon la revendication 9, dans lequel la politique de sécurité de télémétrie (1340) comprend une indication que les circuits de filtrage (1341) doivent filtrer la totalité ou un sous-ensemble spécifié des données de télémétrie associées au contexte d'exécution de confiance.

11. Procédé selon la revendication 9 ou la revendication 10, dans lequel la politique de sécurité de télémétrie (1340) est fournie dans un permis protégé cryptographiquement (1342).

12. Procédé selon la revendication 11, dans lequel le permis protégé cryptographiquement (1342) comprend une structure de données formatée selon un langage de modélisation particulier ou un langage de balisage pour spécifier des paramètres pour la politique de sécurité de télémétrie (1340) et qui est protégée cryptographiquement par une signature.

13. Au moins un support lisible par machine sur lequel est stocké un code de programme qui, lorsqu'il est exécuté par un ou plusieurs processeurs, amène les un ou plusieurs processeurs à effectuer des opérations comprenant les étapes suivantes :
exécuter des instructions dans différents contextes d'exécution sur une pluralité de cœurs de traitement (1301, 1302), les contextes d'exécution comprenant un contexte d'exécution de confiance associé à un environnement d'exécution de confiance ;
pour chaque cœur de traitement (1301, 1302), maintenir un compteur de paquets entachés (TPC) associé au cœur de traitement, le TPC étant incrémenté ou actualisé lorsque le cœur de traitement s'exécute dans le contexte d'exécution de confiance ;
transmettre des données de télémétrie depuis un ou plusieurs cœurs de traitement (1301, 1302) de la pluralité de cœurs de traitement (1301, 1302) dans les différents contextes d'exécution, les données de télémétrie étant associées à la valeur du TPC ;
filtrer au moins une partie des données de télémétrie associées au contexte d'exécution de confiance afin qu'elles soient agrégées par un circuit d'agrégation de télémétrie, le circuit d'agrégation de télémétrie permettant d'agréger les données de télémétrie associées à un ou plusieurs des différents contextes d'exécution, à l'exclusion de la partie des données de télémétrie qui sont filtrées ; et
communiquer les données de télémétrie agrégées par le circuit d'agrégation de télémétrie à un agent externe, une politique de sécurité de télémétrie (1340) étant fournie dans un permis protégé cryptographiquement (1342), et le filtrage comprenant le filtrage de la totalité ou d'un sous-ensemble spécifié des données de télémétrie associées au contexte d'exécution de confiance conformément à la politique de sécurité de télémétrie (1340) spécifiée dans le permis protégé cryptographiquement (1342).
